# EUROPEAN PATENT APPLICATION

(11) **EP 4 443 251 A1**
(43) Date of publication of application: **09.10.2024**
(21) Application number: 22900216.7
(22) Date of filing: 07.11.2022
(51) Int. Cl.: G05B 19/042, A47C 7/56

(54) **CINEMA CHAIR CONTROL SYSTEM AND METHOD, CINEMA CHAIR, ELECTRIC CHAIR, AND SYSTEM**

(30) Priority: 02.12.2021 CN 202111457495; 02.12.2021 CN 202123004045 U; 30.03.2022 CN 202220721780 U
(71) Applicant: DewertOkin Technology Group Co., Ltd., Jiaxing City, Zhejiang Province 314011 (CN)
(72) Inventor: XIE, Zhenhao, Jiaxing, Zhejiang 314011 (CN); WU, Jiajun, Jiaxing, Zhejiang 314011 (CN); LV, Kai, Jiaxing, Zhejiang 314011 (CN); ZANNONI, Luca, Jiaxing, Zhejiang 314011 (CN); FEI, Yue, Jiaxing, Zhejiang 314011 (CN)
(74) Representative: Grünecker Patent- und Rechtsanwälte PartG mbB
(86) International application number: PCT/CN2022/130225
(87) International publication number: WO 2023/098411

(57) **Abstract**

Provided are a cinema chair control system and method, a cinema chair (200), a motorized chair, and a motorized chair system. The cinema chair control system includes multiple near-end controllers (100) configured on cinema chairs (200), a gateway (300), and a first remote control apparatus (400); the multiple near-end controllers (100) are each configured with a communication module (110) and a drive module (120), the communication modules (110) may communicate with each other, and the drive module (120) is configured to receive a control instruction sent from the communication module (110) to control the cinema chair (200); the gateway (300) is in a communication connection with the communication modules (110) and is connected to the Ethernet; and the first remote control apparatus (400) is configured to send the control instruction to at least one near-end controller (100) through the gateway (300).

## Description

This application claims priority to Chinese Patent Application No. 202123004045.0 filed with the China National Intellectual Property Administration (CNIPA) on Dec. 02, 2021, Chinese Patent Application No. 202111457495.7 filed with the CNIPA on Dec. 02, 2021, and Chinese Patent Application No. 202220721780.9 filed with the CNIPA on Mar. 30, 2022, the disclosures of which are incorporated herein by reference in their entireties.

### TECHNICAL FIELD

Embodiments of the present application relate to the field of cinema intelligent control technology, for example, a cinema chair control system and method, a cinema chair, a motorized chair, and a system.

### BACKGROUND

With the development of society, people's living standards have been improved significantly, and the pursuit of quality of life has also increased. The cinema is an important leisure and entertainment venue for consumers in their daily lives, and a comfortable cinema chair can improve comfort during movie watching.

In the related art, to improve the comfort during movie watching, a motorized chair is usually adopted to allow a movie viewer to freely adjust an angle of the seatback. However, the existing cinema chairs are limited in their functions, lack interconnection functions, and cannot be adjusted collectively. When the cinema chairs need to be adjusted collectively after viewers leave a cinema hall or before a movie starts, a managing staff needs to adjust the cinema chairs one by one, thereby increasing the labor strength of the managing staff.

### SUMMARY

The embodiments of the present application provide a cinema chair control system and method, a cinema chair, a motorized chair, and a system.

In a first aspect, the embodiments of the present application provide a cinema chair control system. The cinema chair control system includes multiple near-end controllers, a gateway, and a first remote control apparatus.

The multiple near-end controllers are configured on cinema chairs. Each near-end controller is configured with a communication module and a drive module, and communication modules of the multiple near-end controllers communicate with each other. The drive module is configured to receive a control instruction sent from the communication module to control the cinema chair.

The gateway is in a communication connection with the communication module and is connected to the Ethernet.

The first remote control apparatus sends the control instruction to at least one of the multiple near-end controllers through the gateway.

In a second aspect, the embodiments of the present application provide a cinema chair control method. The cinema chair control method is applied to the cinema chair control system described in any of the embodiments of the present application and is based on a cinema chair network platform. The cinema chair control method includes the following.

A mesh channel is constituted by the gateway and the communication modules of the multiple near-end controllers.

The first remote control apparatus sends the control instruction through the gateway.

The control instruction is transmitted in the mesh channel, and a communication module of at least one near-end controller receives the control instruction to control the cinema chair.

In a third aspect, the embodiments of the present application provide a motorized chair. The motorized chair includes a near-end controller, a wire control switch, a drive motor, a peripheral device, and a human body detection device.

The near-end controller is separately in a communication connection with the wire control switch, the drive motor, the peripheral device, and the human body detection device through a controller area network, and the near-end controller is configured to receive a human body detection signal sent from the human body detection device and output a first control signal corresponding to the human body detection signal to the drive motor and/or the peripheral device, and is configured to receive a wire control switch signal and output a second control signal corresponding to the wire control switch signal to the drive motor and/or the peripheral device.

The drive motor is configured to execute a chair adjustment action corresponding to the first control signal and/or the second control signal.

The peripheral device is configured to execute a peripheral control action corresponding to the first control signal and/or the second control signal.

In a fourth aspect, the embodiments of the present application provide a motorized chair system. The motorized chair system includes an upper computer, a server, a gateway, and at least one motorized chair described in the first aspect.

The upper computer is in a communication connection with the server and is configured to receive a motorized chair control operation, send a control instruction corresponding to the motorized chair control operation to the server, and receive and display a motorized chair working parameter sent from the server.

The server is in a communication connection with the gateway and is configured to send the control instruction to the gateway and receive the motorized chair working parameter sent from the gateway.

The gateway is in a wireless connection with the at least one motorized chair and is configured to send the control instruction to the at least one motorized chair and forward the motorized chair working parameter to the server.

### BRIEF DESCRIPTION OF DRAWINGS

FIG. 1 is a structure diagram of a cinema chair control system according to an embodiment of the present application;
FIG. 2 is a structure diagram of a near-end controller according to an embodiment of the present application;
FIG. 3 is a networking diagram of a cinema chair control system according to an embodiment of the present application;
FIG. 4 is a structure diagram of a drive module according to an embodiment of the present application;
FIG. 5 is a structure diagram of another drive module according to an embodiment of the present application;
FIG. 6 is a structure diagram of a ripple acquisition and amplification circuit according to an embodiment of the present application;
FIG. 7 is a flowchart of a cinema chair control method according to an embodiment of the present application;
FIG. 8 is a schematic diagram of a communication slot according to an embodiment of the present application;
FIG. 9 is a structure diagram of a motorized chair according to embodiment one of the present application;
FIG. 10 is a structure diagram of a motorized chair system according to embodiment two of the present application; and
FIG. 11 is a flowchart of a remote control using a sniff function according to embodiment two of the present application.

### DETAILED DESCRIPTION

The present application will be further described in detail in conjunction with the drawings and the embodiments. It is to be understood that the embodiments set forth below are only intended to illustrate the present application, rather than limiting the present application. Additionally, it is also to be noted that for ease of description, only part, not all, of structures related to the present application are illustrated in the drawings.

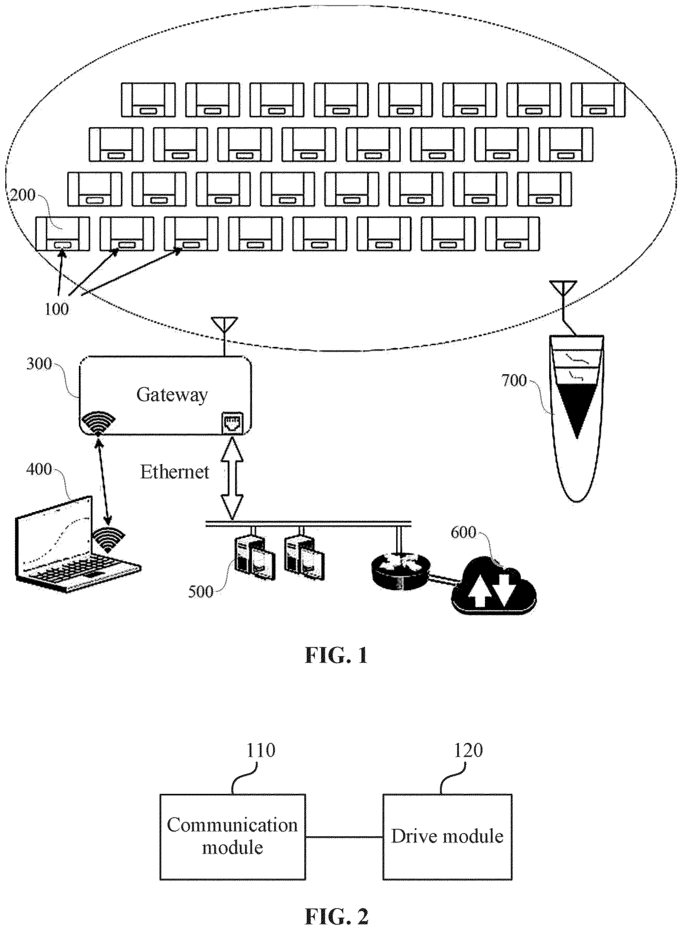

The embodiments of the present application provide a cinema chair control system. FIG. 1 is a structure diagram of a cinema chair control system according to an embodiment of the present application. With reference to FIG. 1, the cinema chair control system includes multiple near-end controllers 100, a gateway 300, and a first remote control apparatus 400.

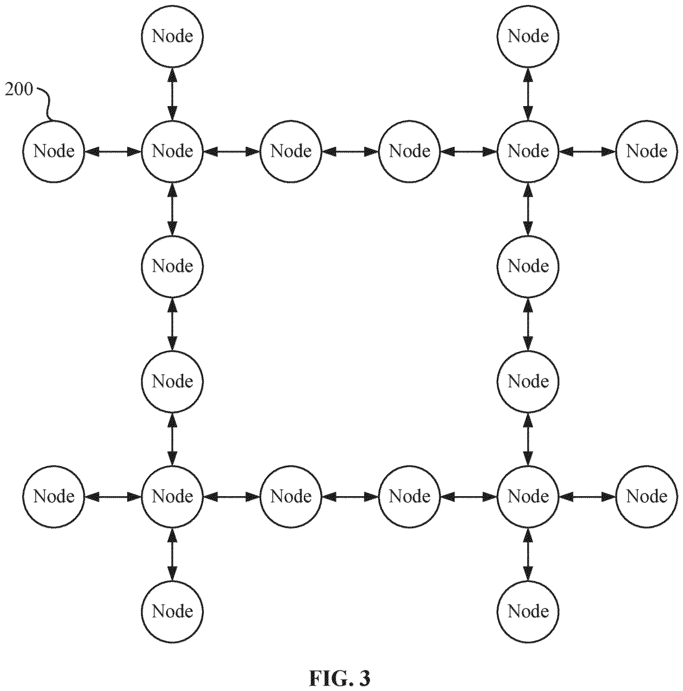

The near-end controllers 100 are configured on cinema chairs 200. As shown in FIG. 2, each near-end controller 100 is configured with a communication module 110 and a drive module 120, and communication modules 110 may communicate with each other. The drive module 120 receives a control instruction sent from the communication module 110 to control the cinema chair 200. As shown in FIG. 3, each cinema chair 200 may be considered as one node, the nodes are connected to each other to form a mesh channel, and the control instruction may be freely transmitted in the mesh channel. The above communication is similar to a mesh networking function. The nodes can communicate with each other, and when the control instruction sent from the gateway 300 cannot cover the whole cinema hall, the control instruction may be forwarded through the nodes to ensure that the whole cinema hall can receive the complete instruction. The above communication also has a self-repair function, and when one of the nodes fails, the whole system may automatically preform re-networking. The near-end controller 100 may be considered as a cinema control box. For example, the control on the cinema chair 200 may be controlling the cinema chair 200 to adjust its angle, controlling the cinema chair to perform pressure induction to count a chair occupancy rate, or the like, which is not limited in the present application. For example, the angle of the cinema chair 200 includes a seatback angle, a cushion angle, a rotation angle, and the like, and an angle between a viewer and the screen of the cinema hall may be adjusted or a sitting posture of the viewer may be adjusted by angle adjustment.

In conjunction with FIGS. 1 and 2, the gateway 300 is in a communication connection with the communication module 110 in the near-end controller 100, and the gateway 300 is connected to the Ethernet. For example, the range covered by the gateway 300 is part or all of the chairs 200 within the cinema hall, then all the chairs 200 in the cinema hall form a private wireless local area network, communication may be performed between the gateway 300 and the chairs 200 and between the chairs 200, and the communication between the gateway 300 and the chairs 200 and the communication between the chairs 200 may be performed in a wired connection manner (for example, by a network cable) or in a wireless connection manner (for example, by wireless fidelity (Wi-Fi) or Bluetooth). In an embodiment, the communication is performed in a wireless communication manner, and such wireless communication adopts a cinema protocol such that the near-end controllers 100 can exchange data over the wireless connection. For example, the communication is implemented based on an nrf51832-based radio frequency (RF) wireless communication and a private communication protocol.

In an embodiment, the communication module may be a chip module in the related art, and the chip module may perform communications operations.

With continued reference to FIG. 1, the first remote control apparatus 400 sends a control instruction to the near-end controller 100 through the gateway 300. For example, the cinema chairs 200 access a cinema chair online platform through the gateway 300 so that all chairs 200 in the cinema hall can be connected to the network. For example, the first remote control apparatus 400 is a smart terminal such as a computer, a mobile phone, and a tablet computer. The smart terminal communicates with the gateway 300 in a wireless communication manner such as a Wi-Fi or Bluetooth connection or in a wired communication manner such as a network cable connection. The smart terminal is configured with a client (for example, a browser, a cinema application (APP) or a third-party APP), the control instruction is received through the interface of the client, and the control instruction is sent through the client. Thus, the status of the cinema chair 200 can be viewed and controlled through the client. In an embodiment, a master server 500 is further configured in the Ethernet, the objective of the master server 500 is to drive the near-end controller 100 in each cinema chair 200 to exchange data, and at the same time, the master server 500 is configured to send data and receive a command from an external device such as a smart terminal.

In an embodiment, the master server 500 may also be denoted as a server.

For example, a working process of the cinema chair control system is as follows: the gateway 300 and the communication modules of the near-end controllers 100 constitute a mesh channel, the first remote control apparatus 400 sends a control instruction to the gateway 300, the control instruction is transmitted in the mesh channel, and a communication module of at least one near-end controller 100 receives the control instruction to drive at least one cinema chair 200 to adjust the angle. It is to be understood that since the gateway 300 is connected to the Ethernet, status data of the cinema chairs 200 can be sent to the master server 500 and a cloud 600.

In summary, in the embodiment of the present application, the near-end controller 100 is configured on the cinema chair 200, the communication modules of the near-end controllers 100 can communicate with each other, the gateway 300 is set to be in a communication connection with the communication modules, the gateway 300 is connected to the Ethernet, and the first remote control apparatus 400 is set to be capable of sending the control instruction to the near-end controller 100 through the gateway 300. The setting of the gateway 300 and the setting of the communication module in the near-end controller 100 enable the cinema chair 200 to have a networking function for making the cinema chair 200 join a private network of all cinema chairs 200 in the cinema hall. The remote control apparatus such as a smart terminal may be locally driven through a switch configured within the cinema or may be remotely driven through the Ethernet or the like. Through the setting in the embodiment of the present application, the functions of the cinema chairs 200 are enriched, and the cinema chairs 200 can be interconnected with each other through a communication connection. The managing staff can adjust the cinema chairs collectively through the first remote control apparatus 400 with a one-button operation after viewers leave the cinema hall or before a movie starts, thereby reducing the labor strength of the managing staff.

With continued reference to FIG. 1, on the basis of the preceding embodiments, in an embodiment, the cinema chair control system further includes a second remote control apparatus 700. The second remote control apparatus 700 is in a communication connection with the communication modules 110 of the near-end controllers 100 and sends the control instruction to the communication modules 110 of the near-end controllers 100. For example, the second remote control apparatus 700 is a remote control or the like. Compared with the first remote control apparatus 400, the second remote control apparatus 700 such as a remote control has fewer functions and is unable to selectively control part of the cinema chairs 200 to perform angle adjustment through the network platform, but it can control the angles of all the cinema chairs 200 in the cinema hall to return to a default angle, thereby collectively adjusting the cinema chairs 200 in a simple and convenient manner and facilitating the operation of the managing staff.

On the basis of the preceding embodiments, in an embodiment, if a wireless communication manner is used for the connection between the gateway and the near-end controllers, the cinema chair control system further includes a wireless communication power amplifier to enhance communication strength between the gateway and the near-end controllers, thereby reducing transmission time of the control instruction and improve the working efficiency. Especially for a relatively large cinema hall, the setting of the wireless communication power amplifier can enable signals of the gateway to be transmitted over a further distance, thereby facilitating the connection between the gateway and more near-end controllers.

On the basis of the preceding embodiments, in an embodiment, the near-end controller further includes a call button. The call button is connected to the communication module of the near-end controller, and the communication module of the near-end controller transmits a call signal to the first remote control apparatus through the gateway. Through the above setting, working personnel may receive a call from a customer at a corresponding position through a reminder apparatus such as a display or an alarm of the first remote control apparatus and then make a rapid response to a problem and a service requirement raised by the customer during movie watching.

On the basis of the preceding embodiments, in an embodiment, the drive module includes a cushion inductive sensor. The cushion inductive sensor is configured to induce pressure to generate an induction signal, and the communication module of the near-end controller transmits the induction signal to the first remote control apparatus through the gateway. For example, after the cushion inductive sensor receives the control instruction, the cushion inductive sensor induces whether the chair is occupied and generates an induction signal, and the generated induction signal is transmitted to the first remote control apparatus through the communication module and the gateway. Through the above setting, working personnel may count an actual chair occupancy rate through the first remote control apparatus, and the actual number of viewers and the number of tickets sold can be counted.

In an embodiment, the drive module includes a human body detection device. For example, the human body detection device is a human body inductive cushion, and the human body inductive cushion may include the cushion inductive sensor.

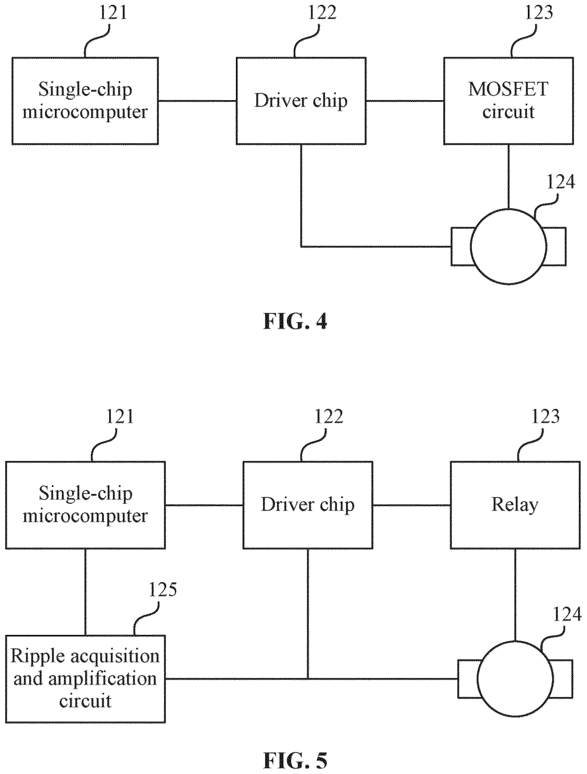

FIG. 4 is a structure diagram of a drive module according to an embodiment of the present application. With reference to FIG. 4, on the basis of the preceding embodiments, in an embodiment, the drive module includes a single-chip microcomputer 121, a driver chip 122, a metal-oxide-semiconductor field-effect transistor (MOSFET) circuit 123 and a motor 124 that are connected in sequence. The driver chip 122 drives the MOSFET circuit 123. For example, the model of the driver chip 122 is vnh7100as. In the embodiment of the present application, the MOSFET circuit 123 is used to control the operating of the motor, instead of a relay. The MOSFET circuit 123 consists of a MOSFET, and compared with the relay, the MOSFET has a faster switch response speed and is in a silent state. Through the above setting, an operating voltage (or an operating speed) of the motor 124 can be better controlled, and the control process is performed in a muted manner. The driver chip 122 may acquire an operating current of the motor. When the motor 124 initiates, the driver chip 122 lowers an initiation voltage to make the motor 124 operate slowly, and then the motor 124 operates at full speed, so as to avoid a large current generated when the motor 124 just initiates, thereby effectively reducing a burden on the power supply when the driver chip 122 initiates.

FIG. 5 is a structure diagram of another drive module according to an embodiment of the present application. With reference to FIG. 5, on the basis of the preceding embodiments, in an embodiment, the drive module further includes a ripple acquisition and amplification circuit 125. The ripple acquisition and amplification circuit 125 is serially connected between the motor 124 and the single-chip microcomputer 121. The ripple acquisition and amplification circuit 125 is configured to acquire and amplify a specific ripple generated during an operating process of the motor 124 and transmit the specific ripple to the single-chip microcomputer 121. The motor 124 generates specific ripple data for each operating circle. In the embodiment of the present application, the amplitude of the ripple generated by the motor 124 is amplified by the ripple acquisition and amplification circuit 125 such that the ripple can be acquired and computed by the single-chip microcomputer 121, and the number of ripples generated when the motor 124 operates over a specific distance is recorded to enable the motor 124 to have a position memory function. Therefore, when the motor 124 is controlled to operate over a specific distance, only the number of ripples needs to be controlled to match the specific distance, and no distance acquisition is needed, thereby reducing distance acquisition difficulty. Through the setting in the embodiment of the present application, the operating of the motor 124 can be accurately controlled by setting a new control algorithm and a control circuit.

In the preceding embodiments, the ripple acquisition and amplification circuit is set in a variety of manners. The setting of the ripple acquisition and amplification circuit is described below, which does not limit the present application.

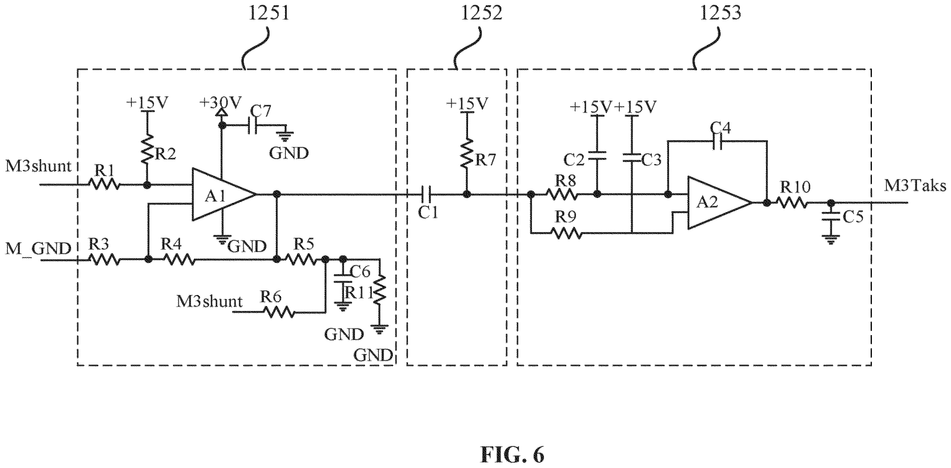

FIG. 6 is a structure diagram of a ripple acquisition and amplification circuit according to an embodiment of the present application. With reference to FIG. 6, on the basis of the preceding embodiments, in an embodiment, the ripple acquisition and amplification circuit includes a first amplification module 1251, an intermediate connection module 1252, and a second amplification module 1253. An input terminal of the first amplification module 1251 is electrically connected to a positive electrode of the motor and receives a signal M3 shunt. The intermediate connection module 1252 is connected between an output terminal of the first amplification module 1251 and an input terminal of the second amplification module 1253. An output terminal of the second amplification module 1253 is electrically connected to the single-chip microcomputer and outputs a signal M3Taks. Through the above setting, the acquisition and amplification of the signal M3 shunt are achieved. For example, a waveform of the output signal M3Taks is a square wave with a voltage of 3.3 V, the number of pulses of the square wave corresponds to the number of ripples generated during the operating of the motor, and the voltage of 3.3 V may be recognized and calculated by the single-chip microcomputer.

With continued reference to FIG. 6, in one implementation of the present application, in an embodiment, the first amplification module 1251 includes a first resistor R1, a second resistor R2, a third resistor R3, a fourth resistor R4, a first amplifier A1, a fifth resistor R5, and a sixth resistor R6.

A first terminal of the first resistor R1 is electrically connected to the positive electrode of the motor.

A first terminal of the second resistor R2 accesses a first voltage signal +15V, and a second terminal of the second resistor R2 is electrically connected to a second terminal of the first resistor R1.

A first terminal of the third resistor R3 is connected to a first ground signal M_GND.

A first terminal of the fourth resistor R4 is electrically connected to a second terminal of the third resistor R3.

A first input terminal of the first amplifier A1 is electrically connected to the second terminal of the first resistor R1, a second input terminal of the first amplifier A1 is electrically connected to a second terminal of the third resistor R3, an output terminal of the first amplifier A1 is electrically connected to a second terminal of the fourth resistor R4, and the output terminal of the first amplifier A1 serves as the output terminal of the first amplification module 1251.

A first terminal of the fifth resistor R5 is electrically connected to the output terminal of the first amplifier A1.

A first terminal of the sixth resistor R6 is electrically connected to the positive electrode of the motor, and a second terminal of the sixth resistor R6 is electrically connected to a second terminal of the fifth resistor R5.

Through the above setting, the first-stage amplification of the signal M3 shunt is achieved.

With continued reference to FIG. 6, in one implementation of the present application, in an embodiment, the intermediate connection module 1252 includes a first capacitor C1 and a seventh resistor R7.

A first terminal of the first capacitor C1 is electrically connected to the output terminal of the first amplification module 1251, and an output terminal of the first capacitor C1 serves as the output terminal of the intermediate connection module 1252.

A first terminal of the seventh resistor R7 is connected to the first voltage signal +15V, and a second terminal of the seventh resistor R7 is electrically connected to a second terminal of the first capacitor C1.

Through the above setting, filtering and tuning of the signal output by the first amplifier A1 are achieved.

With continued reference to FIG. 6, in one implementation of the present application, in an embodiment, the second amplification module 1253 includes an eighth resistor R8, a ninth resistor R9, a second amplifier A2, a second capacitor C2, a third capacitor C3, a fourth capacitor C4, a tenth resistor R10, and a fifth capacitor C5.

A first terminal of the eighth resistor R8 is electrically connected to the second terminal of the first capacitor C 1.

A first terminal of the ninth resistor R9 is electrically connected to the first terminal of the eighth resistor R8.

A first input terminal of the second amplifier A2 is electrically connected to a second terminal of the eighth resistor R8, and a second input terminal of the second amplifier A2 is electrically connected to a second terminal of the ninth resistor R9.

A first terminal of the second capacitor C2 is connected to the first voltage signal +15V, and a second terminal of the second capacitor C2 is electrically connected to the second terminal of the eighth resistor R8.

A first terminal of the third capacitor C3 is electrically connected to the first voltage signal +15V, and a second terminal of the third capacitor C3 is electrically connected to the second terminal of the ninth resistor R9.

A first terminal of the fourth capacitor C4 is electrically connected to the first input terminal of the second amplifier A2, and a second terminal of the fourth capacitor C4 is electrically connected to an output terminal of the second amplifier A2.

A first terminal of the tenth resistor R10 is electrically connected to the output terminal of the second amplifier A2, and a second terminal of the tenth resistor R10 serves as the output terminal of the second amplification module 1253.

A first terminal of the fifth capacitor C5 is electrically connected to the second terminal of the tenth resistor R10, and a second terminal of the fifth capacitor C5 is connected to a second ground signal GND.

Through the above setting, the second-stage amplification of the signal M3 shunt is achieved.

With continued reference to FIG. 6, in an embodiment, the first amplification module 1251 further includes a sixth capacitor C6 and an eleventh resistor R11. A first terminal of the sixth capacitor C6 is electrically connected to the second terminal of the fifth resistor R5, and a second terminal of the sixth capacitor C6 is connected to the second ground signal GND. A first terminal of the eleventh resistor R11 is electrically connected to the second terminal of the fifth resistor R5, and a second terminal of the eleventh resistor R11 is connected to the second ground signal GND.

With continued reference to FIG. 6, in one embodiment, the ripple acquisition and amplification circuit further includes a seventh capacitor C7. A first terminal of the seventh capacitor C7 is electrically connected to a first power terminal of the first amplifier A1, and a second terminal of the seventh capacitor C7 is connected to the second ground signal GND. The first power terminal of the first amplifier A1 is connected to a second voltage signal +30 V A second power terminal of the first amplifier A1 is connected to the second ground signal GND. For example, the first amplifier A1 and the second amplifier A2 may be integrated into the same amplifier chip, and thus the first amplifier A1 and the second amplifier A2 share a power signal.

It is to be noted that FIG. 6 exemplarily shows that two-stage amplification is performed on the signal M3 shunt, which does not limit the present application. In other embodiments, the amplification stage may be set according to requirements.

On the basis of the preceding embodiments, in an embodiment, the cinema chair control system further includes a database including information related to all cinema chairs. The first remote control apparatus displays information to the working personnel according to the information in the database. For example, parameters of all near-end controllers are scanned periodically to obtain data and update the database. The database is thus kept up-to-date. The information in the database is set according to requirements to meet demands of different customers.

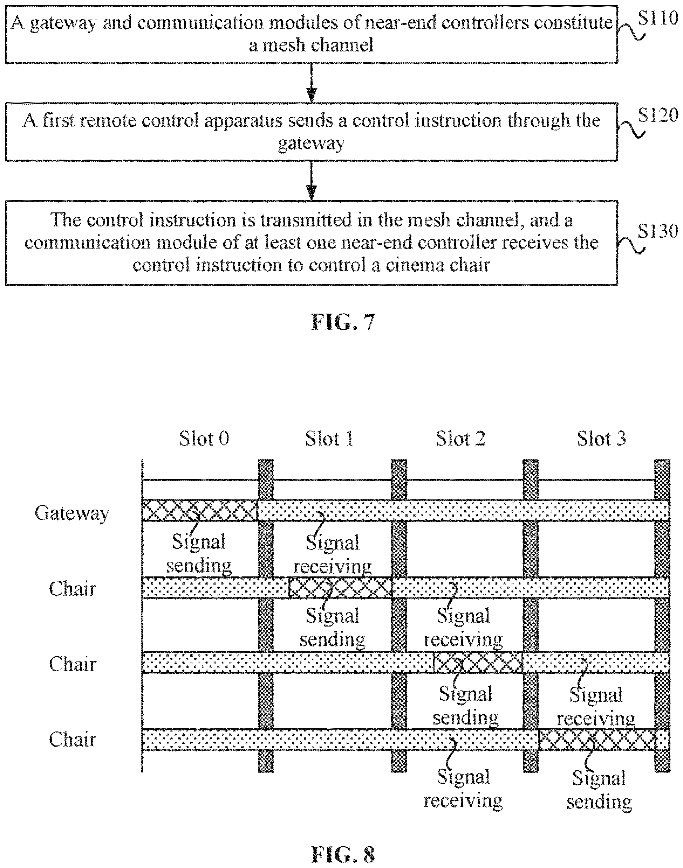

The embodiments of the present application further provide a cinema chair control method. The control method is applied to the cinema chair control system provided by any of the embodiments of the present application and is based on a cinema chair network platform. For example, the cinema chair network platform includes the hardware structure and/or the software program in the cinema chair control system. FIG. 7 is a flowchart of a cinema chair control method according to an embodiment of the present application. With reference to FIG. 7, the cinema chair control method includes S110, S120, and S130.

In S110, a mesh channel is constituted by a gateway and communication modules of near-end controllers.

The cinema chair control system has a networking function for making the cinema chairs join the private network of all cinema chairs in the cinema hall.

In S120, a first remote control apparatus sends a control instruction to the gateway.

The control instruction of the first remote control apparatus may be generated according to playback progress of the movie or an operation of the working personnel. For example, when the movie is finished playing, the first remote control apparatus automatically generates a control instruction. Alternatively, the control instruction typed by a user is received through an interface of a client of the first remote control apparatus.

In S130, the control instruction is transmitted in the mesh channel, and a communication module of at least one near-end controller receives the control instruction to control a cinema chair.

In the embodiment of the present application, based on the cinema chair network platform, the first remote control apparatus sends the control instruction to the gateway, the control instruction is transmitted in the mesh channel, and the communication module of at least one near-end controller receives the control instruction to control the cinema chair. Through the setting in the embodiment of the present application, the function of the cinema chair is enriched, and the cinema chairs can be interconnected with each other through a communication connection. The control on the cinema chair may be controlling the cinema chair 200 to adjust its angle, controlling the cinema chair to perform pressure induction to count the chair occupancy rate, or the like, which is not limited in the present application. For example, the managing staff may adjust the cinema chairs collectively through the first remote control apparatus with a one-button operation after viewers leave the cinema hall or before a movie starts, thereby reducing the labor strength of the managing staff. Alternatively, the working personnel can count the actual chair occupancy rate through the first remote control apparatus to count the actual number of viewers and the number of tickets sold.

On the basis of the preceding embodiments, in an embodiment, the cinema chair control method further includes that a second remote control apparatus sends the control instruction to the communication modules of the near-end controllers to enable all the drive modules to drive all the cinema chairs to perform angle adjustment. Compared with the first remote control apparatus, the second remote control apparatus such as a remote control has fewer functions and is unable to selectively control part of the cinema chairs to perform angle adjustment through the network platform, but it can control angles of all the cinema chairs in the cinema hall to return to the default angle, thereby collectively adjusting the cinema chairs in a simple and convenient manner and facilitating the operation of the managing staff.

On the basis of the preceding embodiments, in an embodiment, the transmission of the control instruction in the communication modules of the near-end controllers includes modifying a communication parameter to enable the control instruction to be transmitted through a channel whose data packet loss rate is less than a preset value. The preset value may be, for example, one thousandth to five thousandths, and the value is small enough to make the channel whose data packet loss rate is less than the preset value be considered as the idlest channel. The communication parameter may be freely modified, and through the above setting, the communication efficiency is improved, thereby facilitating the rapid response of the cinema chair.

On the basis of the preceding embodiments, in an embodiment, the step in which the control instruction is transmitted through the channel whose data packet loss rate is less than the preset value includes the following: if a data packet loss rate of the current channel within at least two frames for transmitting the control instruction is greater than the preset value, the communication parameter is modified, and the channel for transmitting the control instruction is changed; otherwise, the current channel is maintained to transmit the control instruction. For example, there are ten channels available for transmitting the control instruction, and the control instruction is transmitted through one of these channels. Within one hundred frames, the data packet loss rate for transmitting the received control instruction is less than one thousandth, or even if no data packet loss occurs, the current channel is considered as the idlest channel, and the current channel continues being used for transmitting the control instruction. If the data packet loss rate of the received control instruction is greater than one thousandth, the current channel is not considered as the idlest channel, and another channel is selected for transmitting the control instruction by automatically modifying the communication parameter. The communication parameter may be automatically modified in a variety of manners. For example, channel re-selection is achieved by adding 1 to the channel serial number. Through the setting in the embodiment of the present application, the channel selection and the transmission of the control instruction are achieved by automatic trial and error so that the control instruction can be transmitted through the idlest channel, thereby enhancing the communication efficiency and facilitating the rapid response of the cinema chair.

On the basis of the preceding embodiments, in an embodiment, the transmission of the control instruction in the communication modules of the near-end controllers includes that multiple communication modules receive the control instruction and return feedback signals, respectively, and the multiple feedback signals are returned to the gateway at time intervals. For example, FIG. 8 is a schematic diagram of a communication slot according to an embodiment of the present application. FIG. 8 exemplarily illustrates slot0, slot1, slot2, and slot3. In a transmission process of the control instruction, the gateway transmits the control instruction to the communication module of a closer cinema chair in slot0, the communication module of the closer cinema chair transmits the control instruction to the control module of a farther cinema chair, and so on. After the communication module of the cinema chair receives the control instruction, the communication module gives feedback to the node (the communication module of another cinema chair or the gateway) sending the control instruction, a feedback signal is sent to the node, and the feedback signal is then returned through a reverse sending path of the control instruction. In the embodiment of the present application, a time interval is set for the feedback signals returning to the gateway to prevent the feedback signals from being blocked at the location of the gateway node, thereby enhancing smoothness of the channel for transmitting the control instruction and the feedback signal.

In an embodiment, the time interval may be set to 10 ms + random number, and for example, the random number is 1 ms to 10 ms. Through the above setting, the smoothness of the transmission channel can be guaranteed, and a network delay caused by an excessively long waiting time of the feedback signals can be avoided.

On the basis of the preceding embodiments, in an embodiment, the cinema chair control method further includes the following: if a near-end controller fails, the communication module of the near-end controller sends a fault signal to the first remote control apparatus through the gateway. A failure of the near-end controller may be, for example, motor stalling and a sudden increase in current. Since the motor stalling may cause a change in the operating parameter, a failure of the motor is determined. For example, when the motor is in poor contact or is blocked by an external force, the motor stalls, and the current suddenly increases. An anti-clamping function may also be achieved by sending the fault signal. When a hand of a movie viewer is clamped, the current suddenly increases, a fault signal is generated, and the first remote control apparatus may send the control instruction according to the fault signal to control the motor to be powered off, thereby preventing the hand from being clamped. Through the above setting, once the chair fails, the working personnel can be notified timely, thereby facilitating timely maintenance and treatment.

On the basis of the preceding embodiments, in an embodiment, the cinema chair control method further includes the following: after a call signal of a near-end controller is triggered, the communication module of the near-end controller sends the call signal to the first remote control apparatus through the gateway. Through the above setting, the working personnel can receive the call from a customer at a corresponding position through a reminder apparatus such as a display or an alarm of the first remote control apparatus and then make a rapid response to the problem and the service requirement raised by the customer during movie watching.

On the basis of the preceding embodiments, in an embodiment, the cinema chair control method further includes the following: a near-end controller receives an induction signal sent from the corresponding cushion inductive sensor, the communication module of the near-end controller sends the induction signal to the first remote control apparatus through the gateway, and the first remote control apparatus counts the chair occupancy rate according to the induction signal. Through the above setting, the working personnel can count the actual chair occupancy rate through the first remote control apparatus, and the actual number of viewers and the number of tickets sold can be counted.

On the basis of the preceding embodiments, in an embodiment, the cinema chair control method further includes the following: the first remote control apparatus sends a firmware upgrade instruction to the gateway, the firmware upgrade instruction is transmitted in the mesh channel to enable the communication modules of all the near-end controllers to receive the firmware upgrade instruction, and all the near-end controllers perform firmware upgrade according to the firmware upgrade instruction. Through the above setting, one-button firmware upgrade is achieved. When new cinema chair firmware is launched, programs of all chairs can be conveniently upgraded with a one-button operation, and the working personnel do not need to upgrade the cinema chairs one by one, thereby improving the working efficiency.

On the basis of the preceding embodiments, in an embodiment, the cinema chair control method further includes the following: the second remote control apparatus sends the control instruction to the communication modules in the mesh channel, the control instruction is transmitted in the mesh channel, and the communication modules of all the near-end controllers receive the control instruction to drive all the cinema chairs to perform angle adjustment. Compared with the first remote control apparatus, the second remote control apparatus such as a remote control has fewer functions and is unable to selectively control part of the cinema chairs to perform angle adjustment through the network platform, but it can control the angles of all the cinema chairs in the cinema hall to return to the default angle, thereby collectively adjusting the cinema chairs in a simple and convenient manner and facilitating the operation of the managing staff.

On the basis of the preceding embodiments, in an embodiment, a manner for driving the cinema chair to adjust the angle includes the following: when the motor in the drive module initiates, an initiation voltage is lowered, and the voltage is increased after a preset time to enable the motor to operate at full speed. Through the above setting, a large current generated when the motor just initiates can be avoided, thereby effectively reducing the burden on the power supply when the driver chip initiates.

On the basis of the preceding embodiments, in an embodiment, a manner for driving the cinema chair to adjust the angle includes the following: a relationship between the number of specific ripples generated by the motor in the drive module and a position of the motor is recorded, and the position of the motor is determined according to the number of specific ripples. Therefore, when the motor needs to be controlled to operate over a specific distance, only the number of ripples needs to be controlled to match the specific distance, and there is no need for distance acquisition, thereby reducing the distance acquisition difficulty. Through the setting in the embodiment of the present application, the operating of the motor can be accurately controlled by setting a new control algorithm and a control circuit.

On the basis of the preceding embodiments, in an embodiment, the cinema chair network platform is connected to a ticket service call system or a third-party system, thereby achieving more abundant functions.

On the basis of the preceding embodiments, in an embodiment, the cinema chair network platform is connected to the cloud, thereby achieving cloud computing.

On the basis of the preceding embodiments, in an embodiment, information about a cinema chair requested may be directly accessed through the display interface of the first remote control apparatus, so as to obtain the real-time information about the cinema chair.

The embodiments of the present application provide a cinema chair control system and method to enrich the function of the cinema chair and increase the interconnection function.

With the progress of the society, motorized chairs are gradually becoming popular and are used by more users. However, the existing motorized chairs are limited in functions, and can neither automatically sense seating information of a human body nor execute the corresponding control action, thereby leading to low intelligence.

To cope with the above situation, the present application discloses the following embodiments.

### Embodiment one

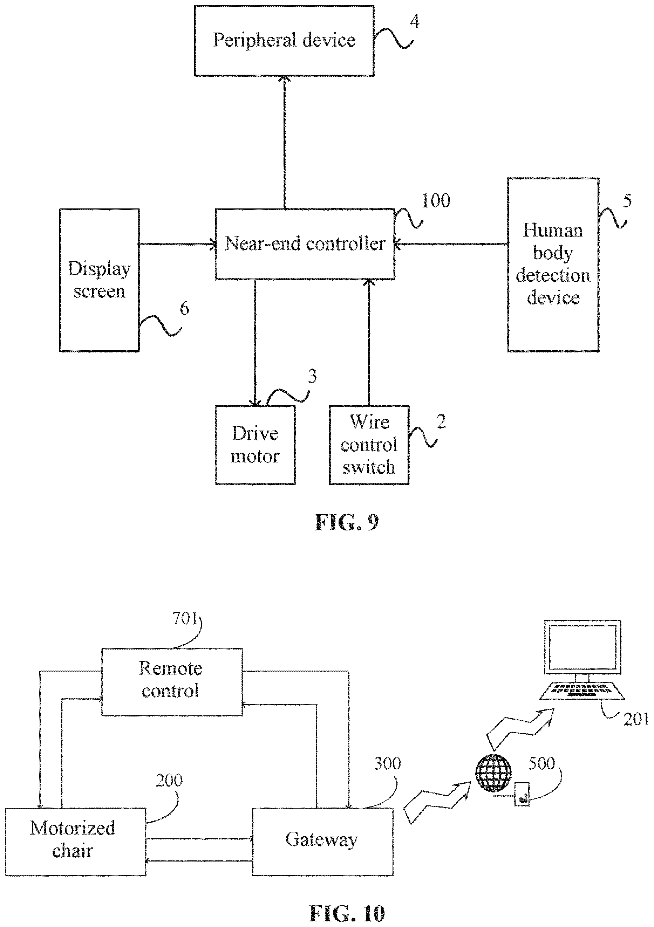

FIG. 9 is a structure diagram of a motorized chair according to embodiment one of the present application. In the embodiment of the present application, the cinema motorized chair parameter can be controlled, and the motorized chair includes a near-end controller 100, a wire control switch 2, a drive motor 3, a peripheral device 4, and a human body detection device 5.

The near-end controller 100 is separately in a communication connection with the wire control switch 2, the drive motor 3, the peripheral device 4, and the human body detection device 5 through a controller area network, and the near-end controller 100 is configured to receive a human body detection signal sent from the human body detection device 5 and output a first control signal corresponding to the human body detection signal to the drive motor 3 and/or the peripheral device 4, and is configured to receive a wire control switch signal and output a second control signal corresponding to the wire control switch signal to the drive motor 3 and/or the peripheral device 4. The drive motor 3 is configured to execute a chair adjustment action corresponding to the first control signal and/or the second control signal. The peripheral device 4 is configured to execute a peripheral control action corresponding to the first control signal and/or the second control signal.

A controller area network bus (CNB) is used for transmitting at least one controller area network signal and converting the controller area network signal into a corresponding information signal. The wire control switch 2 may be used as a connection between a signal transmitter and a signal receiver. The first control signal may be a human body detection signal sent from the human body detection device. The near-end controller converts the received human body detection signal into the first control signal that is used for controlling and driving the motor. An adjustment action implemented by the drive motor according to the first control signal on the chair may include actions such as seatback adjustment, chair unfolding, and chair armrest extension and contraction. For example, when it is detected that a motorized chair is occupied, the chair and the seatback may be adjusted to a preset position, and the preset position is a predicted angle position for optimal human comfort. When it is detected that none of the motorized chairs are occupied, all the chairs in the cinema hall may be automatically restored to a set initial position, thereby saving the time of the working personnel.

In an embodiment, the near-end controller 100 may be referred to as a control box.

In one implementation of the present application, the human body detection device 5 is a human body inductive cushion. The human body inductive cushion includes a capacitive sensor. The capacitive sensor is configured in the human body inductive cushion. The capacitive sensor includes a capacitor plate and a capacitance signal output terminal and is configured to output the human body detection signal to the near-end controller 100 through the capacitance signal output terminal when a capacitor is formed between the capacitor plate and the human body.

In one implementation of the present application, the near-end controller 100 is further configured to output the first control signal corresponding to the human body detection signal to the peripheral device 4. For example, the first control signal is a switch signal. For example, the switch signal may be an activation signal.

In one implementation of the present application, the peripheral device 4 includes a display screen, a lamp band, a heating cushion, a massage component, and a massage motor. The display screen 6 is installed on the armrest of the cinema chair. The lamp band is configured on the chair frame of the motorized chair. For example, the lamp band may be coated by a transparent acrylic layer. The heating cushion is configured on the seating portion or the seatback of the motorized chair. The massage component is configured on the seatback support of the motorized chair, and the massage component includes at least one massage roller element for body massage. The massage motor is electrically connected to the near-end controller, and the massage motor is distributed at the portion of the motorized chair corresponding to the contour of the human body. The massage motor includes a calf massage motor, a thigh massage motor, a hip massage motor, a waist massage motor, a back massage motor, and a neck massage motor. For example, when it is detected that the chair is occupied, the near-end controller may activate and control part of the foregoing peripheral devices. For example, the near-end controller controls the heating cushion to be heated up to a preset temperature.

In the embodiment, the near-end controller is separately in a communication connection with the wire control switch, the drive motor, the peripheral device, and the human body detection device 5 through a controller area network, and the near-end controller is configured to receive a human body detection signal sent from the human body detection device and output a first control signal corresponding to the human body detection signal to the drive motor and/or the peripheral device 4, and is configured to receive a wire control switch signal and output a second control signal corresponding to the wire control switch signal to the drive motor and/or the peripheral device. The drive motor is configured to execute a chair adjustment action corresponding to the first control signal and/or the second control signal. The peripheral device is configured to execute a peripheral control action corresponding to the first control signal and/or the second control signal. In the embodiment of the present application, the case where the motorized chairs in the related art are limited in functions, and can neither automatically sense the seating information of a human body nor execute the corresponding control actions can be avoided, thereby implementing the control function on the motorized chair, improving user experience, and improving the intelligence of the motorized chair.

### Embodiment two

FIG. 10 is a structure diagram of a motorized chair system according to embodiment two of the present application. In the embodiment, the cinema motorized chair parameter can be controlled, and the motorized chair system includes an upper computer 201, a server 500, a gateway 300, and a motorized chair 200.

The upper computer 201 is in a communication connection with the server 500 and is configured to receive a motorized chair control operation, send a control instruction corresponding to the motorized chair control operation to the server 500, and receive and display a motorized chair working parameter sent from the server 500. The server 500 is in a communication connection with the gateway 300 and is configured to send the control instruction to the gateway 300 and receive the motorized chair working parameter sent from the gateway 300. The gateway 300 is in a wireless connection with the motorized chair 200 and is configured to send the control instruction to the motorized chair 200 and forward the motorized chair working parameter to the server 500.

The upper computer 201 may be a web page, a computer application, a mobile phone application or a tablet application, which is not limited in the embodiment and may be flexibly set by those skilled in the art according to requirements. The upper computer 201 may be used for controlling a single motorized chair, part of the motorized chairs, or all the motorized chairs in the cinema hall. The motorized chair working parameter may be information such as an unfolding angle of each structure, a seat occupancy rate, and a chair serial number. For example, the motorized chair system has a built-in function such as overcurrent detection and stroke detection and is configured to obtain working parameter information of the motorized chair and send the working parameter information of the motorized chair to the gateway 300 by using a preset timing function. The gateway summarizes working parameter information of the motorized chairs in the cinema hall and sends the summarized working parameter information to the server 500. The server 500 forwards the working parameter information to the upper computer 201 and displays the working parameter information of the motorized chair by using an external display device. The display device may be a display screen.

The upper computer 201 further includes a permission system which may provide the corresponding function according to a level of a user login account.

The gateway 300 may include a Raspberry Pi 2.4G radio frequency (RF) wireless dongle, and the gateway 300 and the dongle communicate with each other through a universal serial bus (USB) serial port. For example, the gateway 300 may be manually configured with a signal channel and a signal address. The gateway 300 may be connected to the server 500 by means of a wired signal or a wireless signal. The gateway 300 may also be connected to the motorized chair 200 in a wireless connection manner such as a Wi-Fi, ZigBee protocol, and Bluetooth connection for assigning a chair serial number to the motorized chair. The gateway may be installed at a suitable location in the cinema hall according to requirements so that 2.4G RF signals can cover all the motorized chairs. The 2.4G technology may be implemented by a new mobile phone smart card that has an internally integrated 2.4G RF communication module and also includes functions of an ordinary smart card.

In one embodiment, the motorized chair control operation includes any operation performed by the user on the motorized chair. For example, through the second control signal corresponding to the wire control switch signal, the drive motor is controlled to drive the motorized chair to perform actions such as seatback adjustment, chair unfolding, and chair armrest extension and contraction, or the peripheral device is controlled to perform actions such as the heating cushion performs heating, the motor massage performs massage, and the like.

In an embodiment, the motorized chair system further includes a remote control 701. The remote control 701 is configured to configure wireless module information of the gateway and the motorized chair and complete a pairing connection with the gateway and the motorized chair based on the wireless module information. A key panel of the remote control may include multiple control buttons and a liquid crystal display screen, and the managing staff may perform an operation on the remote control 701. The remote control 701 may be used for controlling a single motorized chair, part of the motorized chairs, or all the motorized chairs in the cinema hall to be unfolded or folded.

In an embodiment, the upper computer 201 may be denoted as the first remote control apparatus 400.

In an embodiment, the gateway 300, the remote control, and the motorized chair 200 may communicate with each other via 2.4G RF wireless communication and may be configured to the same signal channel and the same address. The motorized chair 200 and the gateway 300 are set to be in a pairing state, and the remote control 701 is configured to send a pairing instruction and pairing information. The motorized chair 200 and the gateway 300 receive a pairing signal, then change their own signal channels and addresses, return a signal of successful pairing to the remote control 701, and then exit the pairing state.

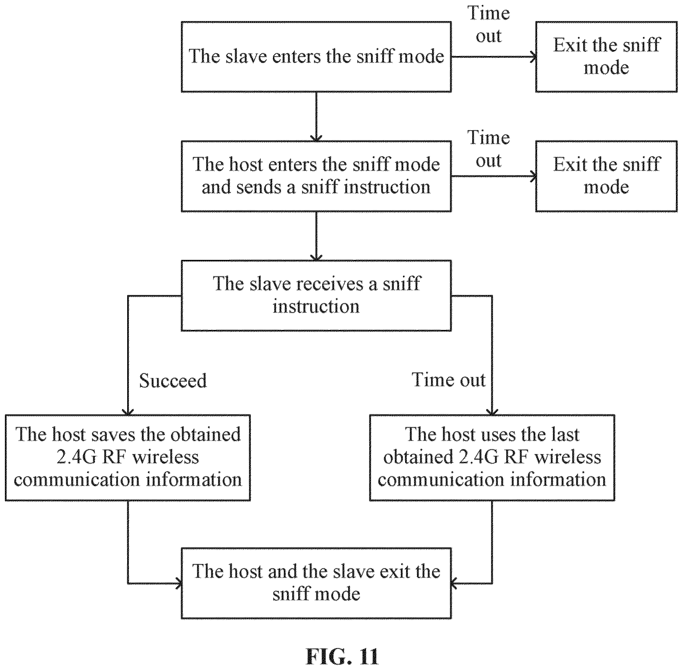

In an embodiment, the remote control 701 of the motorized chair system also has a sniff function. If the remote control 701 is damaged and needs to be replaced, the signal channel and address of the motorized chair 200 or the signal channel and address of the gateway 300 may still be obtained through the sniff function without re-pairing all the motorized chairs with the gateway. FIG. 11 shows a flowchart of a remote control using a sniff function. As shown in FIG. 11, a slave or the host may exit the sniff mode when the time for the slave or the host being in the sniff mode exceeds a preset time. When the slave (the near-end controller or the gateway) receives a sniff instruction sent from the host (the remote control), the slave may feed back its own 2.4G RF wireless communication information including its channel and address, etc. When the host (the remote control) successfully obtains the 2.4G RF wireless communication information of the slave, the host changes its own original 2.4G RF wireless communication information to the obtained 2.4G RF wireless communication information and saves the new 2.4G RF wireless communication information. After the new 2.4G RF wireless communication information is successfully saved, the host and the slave exit the sniff mode at the same time. If the host does not obtain the 2.4G RF wireless communication information of the slave within a preset obtaining time, the host considers the slave being in a timeout state, and then the host still uses the last obtained 2.4G RF wireless communication information.

In an embodiment, the motorized chair system further includes a wireless communication power amplifier. The wireless communication power amplifier is configured to enhance communication strength between the gateway 300 and the motorized chair 200 to reduce the transmission time of the control instruction, thereby improving the working efficiency. Especially for a relatively large cinema hall, the setting of the wireless communication power amplifier can enable the signal of the gateway to be transmitted over a further distance, thereby facilitating the enhancement of the signal of the gateway.

In an embodiment, the motorized chair system further includes a call device. The call device is configured to transmit a call signal to the upper computer 201. The advantage of the setting is that the user can send an alert to the working personnel through the call device when encountering a problem so that the problem faced by the user during movie watching can be solved timely.

In an embodiment, the call device may be a call button configured in the near-end controller.

In the embodiment, the present application can be used to solve the problem in which the motorized chair in the related art is limited in function, and can neither automatically sense the seating information of the human body nor execute the corresponding control actions, thereby implementing the control function on the motorized chair, improving the user experience, and improving the intelligence of the motorized chair.

The present application provides a motorized chair and system to implement the control function on the motorized chair, enrich the function diversity of the motorized chair, improve user experience, and improve the intelligence of the motorized chair.

The preceding are only some embodiments of the present application and the technical principles used therein. It is to be understood by those skilled in the art that the present application is not limited to the embodiments described herein. For those skilled in the art, various apparent modifications, adaptations, and substitutions can be made without departing from the scope of the present application. Therefore, although the present application has been described in detail through the preceding embodiments, the present application is not limited to the preceding embodiments and may include other equivalent embodiments without departing from the concept of the present application. The scope of the present application is determined by the scope of the appended claims.

## Claims

1. A cinema chair control system, comprising:
a plurality of near-end controllers (100), which are configured on cinema chairs (200), wherein each of the plurality of near-end controllers (100) is configured with a communication module (110) and a drive module (120), communication modules (110) of the plurality of near-end controllers (100) are capable of communicating with each other, and the drive module (120) is configured to receive a control instruction sent from the communication module (110) to control a respective cinema chair (200);
a gateway (300), wherein the gateway (300) is in a communication connection with the communication module (110) and is connected to the Ethernet; and
a first remote control apparatus (400), which is configured to send the control instruction to at least one of the plurality of near-end controllers (100) through the gateway (300).

2. The cinema chair control system according to claim 1, wherein the first remote control apparatus (400) comprises at least one of a computer, a mobile phone or a tablet computer.

3. The cinema chair control system according to claim 1 or 2, wherein the first remote control apparatus (400) is configured with a client, and the client is configured to receive the control instruction through an interface of the client and send the control instruction.

4. The cinema chair control system according to claim 1, wherein a manner for a communication connection between the first remote control apparatus (400) and the gateway (300) comprises at least one of a wireless fidelity, Wi-Fi, connection or a Bluetooth connection.

5. The cinema chair control system according to claim 1, further comprising a second remote control apparatus (700), wherein the second remote control apparatus (700) is in a communication connection with the communication modules (110) of the plurality of near-end controllers (100) and is configured to send the control instruction to the communication modules (110) of the plurality of near-end controllers (100).

6. The cinema chair control system according to claim 5, wherein the second remote control apparatus (700) comprises a remote control.

7. The cinema chair control system according to claim 1, wherein the drive module (120) comprises a single-chip microcomputer (121), a driver chip (122), a metal-oxide-semiconductor field-effect transistor (MOSFET) circuit (123) and a motor (124) that are connected in sequence, and the driver chip (122) is a MOS transistor-driven chip.

8. The cinema chair control system according to claim 7, wherein the drive module (120) further comprises:
a ripple acquisition and amplification circuit (125), wherein the ripple acquisition and amplification circuit (125) is serially connected between the motor (124) and the single-chip microcomputer (121); and the ripple acquisition and amplification circuit (125) is configured to acquire and amplify a specific ripple generated during an operating process of the motor (124) and transmit the processed specific ripple to the single-chip microcomputer (121).

9. The cinema chair control system according to claim 8, wherein the ripple acquisition and amplification circuit (125) comprises a first amplification module (1251), an intermediate connection module (1252), and a second amplification module (1253);
wherein an input terminal of the first amplification module (1251) is electrically connected to a positive electrode of the motor (124), the intermediate connection module (1252) is connected between an output terminal of the first amplification module (1251) and an input terminal of the second amplification module (1253), and an output terminal of the second amplification module (1253) is electrically connected to the single-chip microcomputer (121).

10. The cinema chair control system according to claim 9, wherein the first amplification module (1251) comprises:
a first resistor (R1), wherein a first terminal of the first resistor (R1) is electrically connected to the positive electrode of the motor (124);
a second resistor (R2), wherein a first terminal of the second resistor (R2) accesses a first voltage signal, and a second terminal of the second resistor (R2) is electrically connected to a second terminal of the first resistor (R1);
a third resistor (R3), wherein a first terminal of the third resistor (R3) accesses a first ground signal;
a fourth resistor (R4), wherein a first terminal of the fourth resistor (R4) is electrically connected to a second terminal of the third resistor (R3);
a first amplifier (A1), wherein a first input terminal of the first amplifier (A1) is electrically connected to the second terminal of the first resistor (R1), a second input terminal of the first amplifier (A1) is electrically connected to the second terminal of the third resistor (R3), an output terminal of the first amplifier (A1) is electrically connected to a second terminal of the fourth resistor (R4), and the output terminal of the first amplifier (A1) serves as the output terminal of the first amplification module (1251);
a fifth resistor (R5), wherein a first terminal of the fifth resistor (R5) is electrically connected to the output terminal of the first amplifier (A1); and
a sixth resistor (R6), wherein a first terminal of the sixth resistor (R6) is electrically connected to the positive electrode of the motor (124), and a second terminal of the sixth resistor (R6) is electrically connected to a second terminal of the fifth resistor (R5).

11. The cinema chair control system according to claim 9 or 10, wherein the intermediate connection module (1252) comprises:
a first capacitor (C1), wherein a first terminal of the first capacitor (C1) is electrically connected to the output terminal of the first amplification module (1251), and an output terminal of the first capacitor (C1) serves as an output terminal of the intermediate connection module (1252); and
a seventh resistor (R7), wherein a first terminal of the seventh resistor (R7) accesses a first voltage signal, and a second terminal of the seventh resistor (R7) is electrically connected to a second terminal of the first capacitor (C1).

12. The cinema chair control system according to claim 9, 10 or 11, wherein the second amplification module (1253) comprises:
an eighth resistor (R8), wherein a first terminal of the eighth resistor (R8) is electrically connected to the second terminal of the first capacitor (C1);
a ninth resistor (R9), wherein a first terminal of the ninth resistor (R9) is electrically connected to the first terminal of the eighth resistor (R8);
a second amplifier (A2), wherein a first input terminal of the second amplifier (A2) is electrically connected to a second terminal of the eighth resistor (R8), and a second input terminal of the second amplifier (A2) is electrically connected to a second terminal of the ninth resistor (R9);
a second capacitor (C2), wherein a first terminal of the second capacitor (C2) is connected to the first voltage signal, and a second terminal of the second capacitor (C2) is electrically connected to the second terminal of the eighth resistor (R8);
a third capacitor (C3), wherein a first terminal of the third capacitor (C3) is electrically connected to the first voltage signal, and a second terminal of the third capacitor (C3) is electrically connected to the second terminal of the ninth resistor (R9);
a fourth capacitor (C4), wherein a first terminal of the fourth capacitor (C4) is electrically connected to the first input terminal of the second amplifier (A2), and a second terminal of the fourth capacitor (C4) is electrically connected to an output terminal of the second amplifier (A2);
a tenth resistor (R10), wherein a first terminal of the tenth resistor (R10) is electrically connected to the output terminal of the second amplifier (A2), and a second terminal of the tenth resistor (R10) serves as the output terminal of the second amplification module (1253); and
a fifth capacitor (C5), wherein a first terminal of the fifth capacitor (C5) is electrically connected to the second terminal of the tenth resistor (R10), and a second terminal of the fifth capacitor (C5) is connected to a second ground signal.

13. The cinema chair control system according to claim 1, wherein each of the plurality of near-end controllers (100) further comprises a call button, the call button is connected to the communication module (110) of a respective near-end controller (100), and the communication module (110) of the respective near-end controller (100) transmits a call signal to the first remote control apparatus (400) through the gateway (300).

14. The cinema chair control system according to claim 1, wherein the drive module (120) comprises:
a cushion inductive sensor, which is configured to induce pressure to generate an induction signal, wherein the communication module (110) of a respective near-end controller (100) transmits the induction signal to the first remote control apparatus (400) through the gateway (300).

15. The cinema chair control system according to claim 1, further comprising the cinema chairs (200), wherein a cinema chair (200) of the cinema chairs (200) comprises a near-end controller (100) of the plurality of near-end controllers (100), a wire control switch (2), a drive motor (3), a peripheral device (4), and a human body detection device (5);
wherein the near-end controller (100) is separately in a communication connection with the wire control switch (2), the drive motor (3), the peripheral device (4), and the human body detection device (5) through a controller area network, and the near-end controller (100) is configured to receive a human body detection signal sent from the human body detection device (5) and output a first control signal corresponding to the human body detection signal to at least one of the drive motor (3) or the peripheral device (4), and receive a wire control switch signal and output a second control signal corresponding to the wire control switch signal to at least one of the drive motor (3) or the peripheral device (4);
the drive motor (3) is configured to execute a chair adjustment action corresponding to at least one of the first control signal or the second control signal; and
the peripheral device (4) is configured to execute a peripheral control action corresponding to at least one of the first control signal or the second control signal.

16. The cinema chair control system according to claim 15, wherein the human body detection device (5) is a human body inductive cushion, the human body inductive cushion comprises a capacitive sensor disposed in the human body inductive cushion, and the capacitive sensor comprises a capacitor plate and a capacitance signal output terminal and is configured to output the human body detection signal to the near-end controller (100) through the capacitance signal output terminal when a capacitor is formed between the capacitor plate and a human body.

17. A cinema chair control method, being applied to the cinema chair control system according to any one of claims 1 to 16 and based on a cinema chair network platform; wherein the cinema chair control method comprises:
constituting a mesh channel by the gateway (300) and the communication modules (110) of the plurality of near-end controllers (100);
sending, by the first remote control apparatus (400), the control instruction through the gateway (300); and
transmitting the control instruction in the mesh channel, and receiving, by a communication module (110) of at least one of the plurality of near-end controllers (100), the control instruction to control a respective cinema chair (200).

18. The cinema chair control method according to claim 17, wherein before the first remote control apparatus (400) sends the control instruction to the gateway (300), the method further comprises:
receiving the control instruction typed by a user through an interface of a client of the first remote control apparatus (400).

19. The cinema chair control method according to claim 17, further comprising:
sending, by a second remote control apparatus (700), the control instruction to the communication modules (110) of the plurality of near-end controllers (100) to enable all drive modules (120) of the plurality of near-end controllers (100) to drive all the cinema chairs (200) to perform angle adjustment.

20. The cinema chair control method according to claim 17, wherein transmitting the control instruction in the communication modules (110) of the plurality of near-end controllers (100) comprises:
transmitting, through a channel whose data packet loss rate is less than a preset value, the control instruction by modifying a communication parameter.

21. The cinema chair control method according to claim 20, wherein transmitting, through the channel whose data packet loss rate is less than the preset value, the control instruction by modifying the communication parameter comprises:
in response to a data packet loss rate greater than the preset value existing within at least two frames for transmitting the control instruction in a current channel, modifying the communication parameter, and changing a channel for transmitting the control instruction; or in response to a data packet loss rate less than or equal to the preset value existing within at least two frames for transmitting the control instruction in a current channel, keeping the current channel for transmitting the control instruction.

22. The cinema chair control method according to claim 17, wherein transmitting the control instruction in the communication modules (110) of the plurality of near-end controllers (100) comprises:
after receiving the control instruction, returning, by the communication modules (110), feedback signals, respectively; wherein the feedback signals are returned to the gateway (300) at time intervals.

23. The cinema chair control method according to claim 17, further comprising:
in response to a failure in at least one near-end controller (100) among the plurality of near-end controllers (100), sending, by a communication module (110) of the at least one near-end controller (100), a fault signal to the first remote control apparatus (400) through the gateway.

24. The cinema chair control method according to claim 17, further comprising:
after a call signal of at least one near-end controller (100) among the plurality of near-end controllers (100) is triggered, sending, by a communication module (110) of the at least one near-end controller (100), the call signal to the first remote control apparatus (400) through the gateway (300).

25. The cinema chair control method according to claim 17, further comprising:
receiving, by each of the plurality of near-end controllers (100), an induction signal sent from a respective cushion inductive sensor;
sending, by the communication module (100) of each of the plurality of near-end controllers (100), the induction signal to the first remote control apparatus (400) through the gateway (300); and
counting, by the first remote control apparatus (400), a chair occupancy rate according to the induction signal.

26. The cinema chair control method according to claim 17, further comprising:
sending, by the first remote control apparatus (400), a firmware upgrade instruction to the gateway (300);
transmitting the firmware upgrade instruction in the mesh channel to enable the communication modules (110) of the plurality of near-end controllers (100) to receive the firmware upgrade instruction; and
performing, by the plurality of near-end controllers (100), firmware upgrade according to the firmware upgrade instruction.

27. The cinema chair control method according to claim 17, further comprising:
sending, by a second remote control apparatus (700), the control instruction to the communication modules (110) in the mesh channel; and
transmitting the control instruction in the mesh channel, and receiving, by the communication modules (110) of the plurality of near-end controllers (100), the control instruction to drive all the cinema chairs (200) to perform angle adjustment.

28. The cinema chair control method according to claim 17 or 27, wherein driving the cinema chairs to perform angle adjustment comprises:
in response to an initiation of a motor (124) in the drive module (120), lowering an initiation voltage of the motor (124); and
increasing the voltage after a preset time to enable the motor (124) to operate at full speed.

29. The cinema chair control method according to claim 17 or 27, wherein driving the cinema chairs to perform angle adjustment comprises:
recording a relationship between a number of specific ripples generated by a motor (124) in the drive module (120) and a position of the motor (124); and
determining the position of the motor (124) based on the relationship and the number of specific ripples.

30. A cinema chair, being applied to the cinema chair control system according to any one of claims 1 to 16 and comprising a near-end controller (100) of the plurality of near-end controllers (100), a wire control switch (2), a drive motor (3), a peripheral device (4), and a human body detection device (5);
wherein the near-end controller (100) is separately in a communication connection with the wire control switch (2), the drive motor (3), the peripheral device (4), and the human body detection device (5) through a controller area network, and the near-end controller (100) is configured to receive a human body detection signal sent from the human body detection device (5) and output a first control signal corresponding to the human body detection signal to at least one of the drive motor (3) or the peripheral device (4), and receive a wire control switch signal and output a second control signal corresponding to the wire control switch signal to at least one of the drive motor (3) or the peripheral device (4);
the drive motor (3) is configured to execute a chair adjustment action corresponding to at least one of the first control signal or the second control signal;
the peripheral device (4) is configured to execute a peripheral control action corresponding to at least one of the first control signal or the second control signal.

31. The cinema chair according to claim 30, wherein the human body detection device (5) is a human body inductive cushion, the human body inductive cushion comprises a capacitive sensor disposed in the human body inductive cushion, and the capacitive sensor comprises a capacitor plate and a capacitance signal output terminal and is configured to output the human body detection signal to the near-end controller (100) through the capacitance signal output terminal when a capacitor is formed between the capacitor plate and a human body.

32. The cinema chair according to claim 30 or 31, wherein the first control signal comprises a switch signal corresponding to the human body detection signal; and the near-end controller (100) is further configured to output the switch signal corresponding to the human body detection signal to the peripheral device (4).

33. The cinema chair according to claim 30, wherein the peripheral device (4) comprises a display screen (6), a lamp band, a heating cushion, a massage component, and a massage motor;
wherein the display screen (6) is installed on an armrest of the cinema chair; the lamp band is arranged on a chair frame of the cinema chair;
the heating cushion is arranged on a seating portion or a seatback of the cinema chair;
the massage component is arranged on a seatback support of the cinema chair, and the massage component comprises at least one massage roller element for body massage; and
the massage motor is electrically connected to the near-end controller (100), and the massage motor is distributed at a portion of the cinema chair corresponding to a contour of a human body.

34. A cinema chair control system, comprising the first remote control apparatus (400), a server (500), the gateway (300), and at least one cinema chair (200) according to any one of claims 30 to 33;
wherein the first remote control apparatus (400) is in a communication connection with the server (500) and is configured to: receive a motorized chair control operation, send a control instruction corresponding to the motorized chair control operation to the server (500), and receive and display a motorized chair working parameter sent from the server (500);
the server (500) is in a communication connection with the gateway (300) and is configured to send the control instruction to the gateway (300) and receive the motorized chair working parameter sent from the gateway (300); and
the gateway (300) is in a wireless connection with the at least one cinema chair (200) and is configured to send the control instruction to the at least one cinema chair (200) and forward the motorized chair working parameter to the server (500).

35. The cinema chair control system according to claim 34, further comprising a remote control (701), wherein the remote control (701) is configured to configure wireless module information of the gateway (300) and the at least one cinema chair (200) and complete a pairing connection with the gateway (300) and the at least one cinema chair (200) based on the wireless module information.

36. The cinema chair control system according to claim 35, wherein the remote control (701) is an electronic device having a sniff function.

37. The cinema chair control system according to claim 34, wherein a manner for the wireless connection between the gateway (300) and the at least one cinema chair (200) is a wireless fidelity, Wi-Fi, connection, a connection using ZigBee protocol or a Bluetooth connection.

38. The cinema chair control system according to claim 34, further comprising a wireless communication power amplifier, wherein the wireless communication power amplifier is configured to enhance communication strength between the gateway (300) and the at least one cinema chair (200).

39. The cinema chair control system according to claim 34, further comprising a call button, wherein the call button is configured to transmit a call signal to the first remote control apparatus (400).

40. A motorized chair, comprising a control box (100), a wire control switch (2), a drive motor (3), a peripheral device (4), and a human body detection device (5);
wherein the control box (100) is separately in a communication connection with the wire control switch (2), the drive motor (3), the peripheral device (4), and the human body detection device (5) through a controller area network, and the control box (100) is configured to receive a human body detection signal sent from the human body detection device (5) and output a first control signal corresponding to the human body detection signal to at least one of the drive motor (3) or the peripheral device (4), and receive a wire control switch signal and output a second control signal corresponding to the wire control switch signal to at least one of the drive motor (3) or the peripheral device (4);
the drive motor (3) is configured to execute a chair adjustment action corresponding to at least one of the first control signal or the second control signal; and
the peripheral device (4) is configured to execute a peripheral control action corresponding to at least one of the first control signal or the second control signal.

41. The motorized chair according to claim 40, wherein the human body detection device (5) is a human body inductive cushion, the human body inductive cushion comprises a capacitive sensor disposed in the human body inductive cushion, and the capacitive sensor comprises a capacitor plate and a capacitance signal output terminal and is configured to output the human body detection signal to the control box (100) through the capacitance signal output terminal when a capacitor is formed between the capacitor plate and a human body.

42. The motorized chair according to claim 40 or 41, wherein the first control signal comprises a switch signal corresponding to the human body detection signal; and the control box (100) is further configured to output the switch signal corresponding to the human body detection signal to the peripheral device (4).

43. The motorized chair according to claim 40, wherein the peripheral device (4) comprises a display screen (6), a lamp band, a heating cushion, a massage component, and a massage motor;
wherein the display screen (6) is installed on an armrest of the motorized chair; the lamp band is arranged on a chair frame of the motorized chair;
the heating cushion is arranged on a seating portion or a seatback of the motorized chair;
the massage component is arranged on a seatback support of the motorized chair, and the massage component comprises at least one massage roller element for body massage;
the massage motor is electrically connected to the control box (100), and the massage motor is distributed at a portion of the cinema chair corresponding to a contour of a human body.

44. A motorized chair system, comprising an upper computer (201), a server (500), a gateway (300), and at least one motorized chair (200) according to any one of claims 40 to 43;
wherein the upper computer (201) is in a communication connection with the server (500) and is configured to: receive a motorized chair control operation, send a control instruction corresponding to the motorized chair control operation to the server (500), and receive and display a motorized chair working parameter sent from the server (500);
the server (500) is in a communication connection with the gateway (300) and is configured to send the control instruction to the gateway (300) and receive the motorized chair working parameter sent from the gateway (300); and
the gateway (300) is in a wireless connection with the at least one motorized chair (200) and is configured to send the control instruction to the at least one motorized chair (200) and forward the motorized chair working parameter to the server (500).

45. The motorized chair system according to claim 44, further comprising a remote control (701), wherein the remote control (701) is configured to configure wireless module information of the gateway (300) and the at least one motorized chair (200) and complete a pairing connection with the gateway (300) and the at least one motorized chair (200) based on the wireless module information.

46. The motorized chair system according to claim 45, wherein the remote control (701) is an electronic device having a sniff function.

47. The motorized chair system according to claim 44, wherein a manner for the wireless connection between the gateway (300) and the at least one motorized chair (200) is a wireless fidelity, Wi-Fi, connection, a connection using ZigBee protocol or a Bluetooth connection.

48. The motorized chair system according to claim 44, further comprising a wireless communication power amplifier, wherein the wireless communication power amplifier is configured to enhance communication strength between the gateway (300) and the at least one motorized chair (200).

49. The motorized chair system according to claim 44, further comprising a call device, wherein the call device is configured to transmit a call signal to the upper computer (201).
